# EUROPEAN PATENT APPLICATION

(11) **EP 4 807 561 A1**
(43) Date of publication of application: **16.09.2026**
(21) Application number: 26163825.8
(22) Date of filing: 11.03.2026
(51) Int. Cl.: G06F 11/07, G06F 11/34, G07F 19/00

(54) **MANAGEMENT SYSTEM AND MANAGEMENT METHOD**

(30) Priority: 14.03.2025 JP 2025041548
(71) Applicant: GLORY LTD., Himeji-shi Hyogo 670-8567 (JP)
(72) Inventor: FUKUNISHI, Yuta, Hyogo, 670-8567 (JP); TAMEIKE, Tetsuya, Hyogo, 670-8567 (JP); KOBAYASHI, Satoru, Hyogo, 670-8567 (JP); KOIKE, Yuuki, Hyogo, 670-8567 (JP)
(74) Representative: SSM Sandmair

(57) **Abstract**

A maintenance management system includes: one or more apparatuses configured to generate log data including error information that includes information on an error having occurred therein; and a management apparatus configured to manage the log data acquired from each apparatus, detect a frequent error, based on the error information included in each log data, and perform a notification process for notifying a predetermined notification apparatus set as a notification destination of occurrence of the frequent error.

## Description

### TECHNICAL FIELD

The present disclosure relates to a management system and a management method for performing maintenance management for an apparatus.

### BACKGROUND ART

In recent years, various types of money handling apparatuses have been used in various places. For example, ATMs (Automated Teller Machines) are used at financial institutions and change machines are used at retail stores. Some money handling apparatuses generate log data including information on money handling and information on money handled in the money handling. Such log data is used to investigate errors that have occurred in the money handling apparatus. For example, Japanese Patent No. 6162628 discloses a log acquisition device that retains log data, which was obtained around the time an error first occurred in a money handling apparatus, in a memory provided inside the device. In this device, the memory area is divided into an overwrite area and a storage area, and a predetermined number of log data obtained around the time the error first occurred is retained in the storage area. By retaining the information at the time the error occurred in the device, loss of information necessary for error investigation is prevented.

In the conventional art described above, the log data obtained around the time the error occurred can be retained in the device, but there is a state relevant to the error occurrence that cannot be known from the data. For example, if there is the same error that frequently occurs in many money handling apparatuses, it is desired to preferentially solve the cause of this error. However, it is difficult to identify from merely recorded log data whether an occurred error is a frequent error.

### SUMMARY

The present disclosure has been made in view of the problems, as well as other problems, of the conventional art, and the present disclosure addresses these issues, as discussed herein, with a management system and a management method capable of notifying occurrence of a frequent error.

A management system according to one aspect of the present disclosure includes: one or more apparatuses configured to generate log data including error information that includes information on an error having occurred therein; and a management apparatus configured to manage the log data acquired from each apparatus, detect a frequent error, based on the error information included in each log data, and perform a notification process for notifying a predetermined notification apparatus set as a notification destination of occurrence of the frequent error.

In the above configuration, the management apparatus may determine that the error in the error information is the frequent error based on a result of comparison between a number of occurrences of errors, whose type is the same as a type of the error in the error information, within a predetermined period, and a predetermined threshold.

In the above configuration, the management apparatus may calculate a total number by summing up the number of occurrences of the same type of errors within the predetermined period, across a plurality of apparatuses installed in a predetermined area, and determine that the error in the error information is the frequent error, based on a result of comparison between the total number and a predetermined threshold.

In the above configuration, the threshold may be set to different values for each type of apparatus.

In the above configuration, the threshold may be set to different values for each area where the apparatuses are installed.

In the above configuration, the management apparatus may manage person-in-charge information including information on correspondence between a work to be performed in the apparatus for handling each of a plurality of types of errors, and a person in charge capable of performing the work. The management apparatus may specify the type of the frequent error based on the error information, select a person in charge capable of performing the work corresponding to the specified type of the frequent error based on the person-in-charge information, and set the notification apparatus corresponding to the selected person in charge as the notification destination.

In the above configuration, the management apparatus may manage person-in-charge information including at least one of: information on a technical level of each person in charge who performs work corresponding to an error in the apparatus; and information on a record of the work that each person in charge has performed in each apparatus in the past. The management apparatus may specify a type of the frequent error based on the error information, select a person in charge who has the technical level corresponding to the specified type of the frequent error and/or a person in charge who has experienced the work corresponding to the specified type of the frequent error, based on the person-in-charge information, and set the notification apparatus corresponding to the selected person in charge as the notification destination.

In the above configuration, the management apparatus may manage person-in-charge information on correspondence between a plurality of types of errors and persons in charge capable of investigating the respective errors. The management apparatus may specify a type of the frequent error based on the error information, select a person in charge capable of investigating the specified type of the frequent error, based on the person-in-charge information, and set the notification apparatus corresponding to the selected person in charge as the notification destination.

In the above configuration, the management apparatus may extract, from among a plurality of log data managed therein, log data of an apparatus in which the frequent error has occurred, and log data of an apparatus in which the frequent error has not occurred, and transmit the extracted log data to the notification apparatus set as the notification destination.

In the above configuration, the management apparatus may transmit, to the notification apparatus set as the notification destination, information on a difference between log data of an apparatus in which the frequent error has occurred and log data of an apparatus in which the frequent error has not occurred.

In the above configuration, the log data of the apparatus in which the frequent error has not occurred may be log data of the apparatus having a component that is related to the frequent error and included in the apparatus in which the frequent error has occurred.

In the above configuration, when maintenance work will be performed on an apparatus having a component that is related to the frequent error and included in the apparatus in which the frequent error has occurred, the management apparatus may transmit information on the frequent error to a communication terminal corresponding to a person in charge who performs the maintenance work.

A management method according to the present disclosure includes: generating, by an apparatus, log data including error information that includes information on an error having occurred in the apparatus; acquiring, by a management apparatus, the log data from each apparatus to manage acquired log data in the management apparatus; and detecting, by the management apparatus, a frequent error based on the error information included in each log data, to perform a notification process by which occurrence of the frequent error is notified to a predetermined notification apparatus set as a notification destination.

### BRIEF DESCRIPTION OF THE DRAWINGS

FIG. 1 is a schematic diagram illustrating an outline of a maintenance management system according to an embodiment of the present disclosure;
FIG. 2 shows an example of a specific configuration of the maintenance management system;
FIG. 3 shows an example of report data;
FIG. 4 is a flowchart showing an example of a process flow performed by a management apparatus;
FIGS. 5A to 5C show examples of data and setting stored in a memory of the management apparatus;
FIG. 6 shows an example of reference data on errors; and
FIG. 7 shows an example of data on a record of maintenance work.

### DESCRIPTION OF EMBODIMENTS

Hereinafter, a management system and a management method according to the present disclosure will be described with reference to the drawings. The types of apparatuses to be subjected to maintenance management by the management system are not particularly limited. In the present embodiment, a management system that performs maintenance management for money handling apparatuses as a maintenance management system will be described as an example.

### [Outline of maintenance management system]

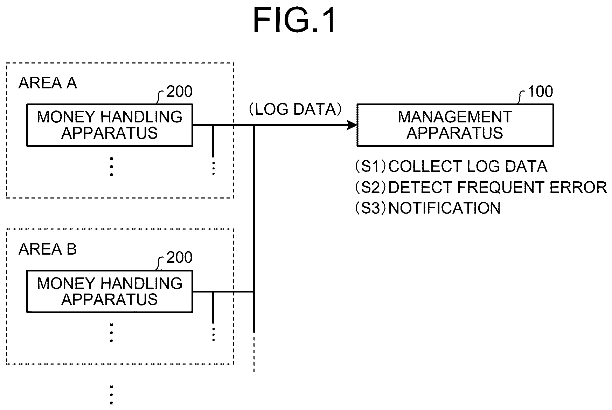

FIG. 1 is a schematic diagram illustrating an outline of a maintenance management system according to the present embodiment. The maintenance management system includes a management apparatus 100 and money handling apparatuses 200. The types of the money handling apparatuses 200 are not particularly limited. Examples of the money handling apparatuses 200 include apparatuses that handle depositing and/or dispensing of money. The money may be banknotes and/or coins. Such apparatuses may be used at retail stores and financial institutions. The number of money handling apparatuses 200 to be subjected to maintenance management by the management apparatus 100 is also not particularly limited.

The management apparatus 100 acquires log data from the money handling apparatuses 200 (S1). For example, as shown in FIG. 1, the management apparatus 100 acquires, via a network, log data from each money handling apparatus 200 installed in area A and each money handling apparatus 200 installed in area B.

The term "area" used in the present embodiment refers to a concept indicating an installation place of the money handling apparatus 200. Depending on the type and usage of the money handling apparatus 200, the term "area" may indicate a location or an area. For example, different places within the same store where money handling apparatuses 200 are installed, such as a sales floor, checkout counter, back office, etc., in a retail store, may be regarded as separate areas. For example, regions where one or more stores having money handling apparatuses 200 installed therein are present may be regarded as separate areas, such as an area including store A or an area including store B. In the case of financial institutions as well, places in a branch may be regarded as separate areas, or regions each including a plurality of branches may be regarded as separate areas. For example, areas may be set according to the number of workers, offices, etc., performing operations for maintenance management, and the number of money handling apparatuses 200, stores, etc., subjected to the maintenance management.

The money handling apparatus 200 generates log data. For example, the money handling apparatus 200 generates log data each time the apparatus 200 performs money handling. The log data includes information on the money handling performed by the money handling apparatus 200. If an error occurs while money handling is being performed, the money handling apparatus 200 generates log data including error information. The money handling apparatus 200 may not necessarily output log data for each money handling operation, and may output log data including information on a plurality of money handling operations. For example, information on all money handling operations performed during a single day may be outputted as a single log file. In this case as well, separators may be included in the log data to distinguish log data of each money handling operation, so that log data of a money handling operation in which an error has occurred can be distinguished from log data of a money handling operation normally completed without an error.

The money handling apparatus 200 transmits the log data to the management apparatus 100 at a preset timing. For example, the money handling apparatus 200 stores the generated log data in a memory provided therein and, after the store closes, transmits all the log data outputted during business hours of the store to the management apparatus 100. The timing at which the money handling apparatus 200 transmits log data can be changed by setting. For example, the money handling apparatus 200 may transmit the log data each time money handling is performed, or may transmit the log data collectively for a plurality of business days.

The management apparatus 100 can detect that an error has occurred in the money handling apparatus 200, based on the fact that the log data outputted from the money handling apparatus 200 includes error information.

The error information includes an error code. The error code is an identification number (identification information) used to distinguish an error. The money handling apparatus 200 detects an error and identifies the error code corresponding to the detected error, based on settings prepared in advance in the apparatus 200. The error code may be set for each type of errors. Examples of error types include an error related to money jamming, an error related to money transport, an error related to recognition of money denomination, an error related to recognition of money authenticity, etc., and correspondence between error types and error codes is set in advance.

During money handling, if jamming of money occurs in a transport path that transports money inside an apparatus, error information includes an error code indicating money jamming in the transport path. During money handling in which pieces of money are handled while being transported one by one at predetermined intervals in the apparatus, if a plurality of pieces of money are transported while at least portions thereof overlap each other, error information includes an error code indicating overlapping of money. During money handling, if jamming of money occurs in a storage unit that stores money in the apparatus, error information includes an error code indicating money jamming in a storage unit. During money handling, if a recognition unit that recognizes denomination and authenticity of money cannot recognize money, error information includes an error code indicating recognition error. During money handling, if a value detected by a sensor provided in the apparatus is abnormal, error information includes an error code indicating detection of the abnormal value. Similarly, if voltage and/or current applied to a sensor and/or an actuator has an abnormal value, error information may include an error code indicating detection of the abnormal value. These errors are merely examples, and do not limit the error types and the correspondence between error types and error codes.

The error information may include additional information on the error. The additional information is used to investigate the cause of the error. The money handling apparatus 200 may include additional information corresponding to the error code, i.e., the type of the error, in the error information. The money handling apparatus 200 may include information required for error recovery and/or cause investigation, in the error information.

For example, when an error related to money transport has occurred, the money handling apparatus 200 may add, to the additional information, information on a transport unit and/or components of the transport unit, information on the output values of a sensor and/or an actuator used for the money transport, and information on the type and/or the version of a software program used for the money transport. Likewise, when an error related to money storage has occurred, the money handling apparatus 200 may add, to the additional information, information on a storage unit and/or components of the storage unit, information on the output values of a sensor and/or an actuator used for the money storage, and information on the type and/or the version of a software program used for the money storage. When an error related to money recognition has occurred, the money handling apparatus 200 may add, to the additional information, information on a recognition unit and/or components of the recognition unit, information on the output values of a sensor and/or an actuator used for the money recognition, and information on the type and/or the version of a software program used for money recognition.

The management apparatus 100 detects a frequent error, based on the error information included in the log data of the money handling apparatus 200 (S2). The management apparatus 100 determines whether the error is a frequent error based on the number of occurrences of the same type of error. The determination is performed by comparing the number of occurrences and a threshold prepared in advance. For example, the management apparatus 100 determines that a frequent error has occurred when the number of log data including the same error code, obtained within a predetermined period, is equal to or greater than a predetermined threshold.

The management apparatus 100 performs a determination process for determining whether an error occurred in a money handling apparatus 200 is a frequent error, based on a determination condition prepared in advance. By preparing a plurality of determination conditions in which at least one of "error code", "threshold", "area", "type of money handling apparatus 200", and "period during which the number of errors is counted" is changed, the management apparatus 100 can detect a frequent error, based on each determination condition.

As the determination condition, different thresholds can be set depending on the error code. For example, the determination condition can be set such that an error with error code "1" is determined as a frequent error if it occurs twice in one day, and an error with error code "2" is determined as a frequent error if it occurs ten times in one day.

As the determination condition, different thresholds can be set depending on the area. For example, the determination condition can be set such that an error with error code "3" is determined as a frequent error if it occurs twice in one day in area "A", and is determined as a frequent error if it occurs ten times in one day in area "B".

As the determination condition, different thresholds can be set depending on the type of the money handling apparatus 200. For example, the determination condition can be set such that an error with error code "4" is determined as a frequent error when it occurs ten times in one day in the same money handling apparatus 200, and an error with error code "5" is determined as a frequent error if it occurs a total of ten times in one day across the money handling apparatuses 200 in the same area, regardless of the number and types of the money handling apparatuses 200 in which the error has occurred.

For another example, the determination condition can be set such that an error with error code "6" is determined as a frequent error if it occurs twice in one day in the money handling apparatus 200 of type "P", and is determined as a frequent error if it occurs five times in one day in the money handling apparatus 200 of type "Q".

The types of money handling apparatuses 200 in the determination condition may be classified according to differences in usage or intended purpose, such as an ATM, a change machine, and a money exchanger. In this case, for example, even for the same error, different thresholds may be set between an ATM and a change machine.

The types of money handling apparatuses 200 may be classified by model numbers indicating differences in models of the money handling apparatuses 200. Differences in model numbers may include differences in specifications. In this case, for example, the determination condition can be set such that an error with error code "7" is determined as a frequent error if it occurs twice in one day in the money handling apparatus 200 with model number "X", and is determined as a frequent error if it occurs five times in one day in the money handling apparatus 200 with model number "Y", even when the intended purposes of these apparatuses 200 are the same. In a specific example in which the money handling apparatuses 200 are used for the same intended purpose as change machines, different thresholds for the same error can be set between a change machine for a cash register operated by a cashier, and a change machine for self-checkout operated by a customer.

As the determination condition, a period during which a total number of errors is counted can be set. In the above example, the number of errors that occurred in one day is compared with the threshold. Alternatively, the counting period for comparing the total number of error occurrences with the threshold can be set, such as during a single money handling operation, one hour, one week, or one month. The period may be specified based on the number of money handling operations, or time units such as seconds, minutes, hours, or the like. The period may be specified by using time points such as date, day, weekday, month, year, or the like.

In the above examples, the error code, area, type of money handling apparatuses 200, and period during which the number of errors is counted are separately described, but these may be combined to form one determination condition. For example, the determination condition can be set such that an error with error code "8" is determined as a frequent error if the total number of occurrences of this error within a period of "one week" in the apparatus 200 with model number "X" installed in area "A" has reached a threshold of "10 times". The contents and the number of contents to be selectively combined, from among the error code, area, type of money handling apparatuses 200, and period during which the number of errors is counted, are not particularly limited.

Upon detecting a frequent error, the management apparatus 100 performs a notification process for notifying a predetermined notification destination of information on the frequent error (S3). The management apparatus 100 transmits the information on the frequent error to one or more communication terminals set as notification destinations, via the network. The communication terminal displays the information received from the management apparatus 100 on a display, whereby a person in charge of handling a frequent error is notified of occurrence of the frequent error. The communication terminal is an example of a notification apparatus designated as a notification destination of a frequent error. The type and configuration of the notification apparatus are not particularly limited as long as the notification apparatus can receive information on a frequent error through communication with the management apparatus 100, and can perform the notification process for notifying occurrence of the frequent error. In the present embodiment, a communication terminal as a notification destination (notification apparatus) is simply referred to as a notification destination in some cases.

For example, notification is performed to a maintenance worker who goes to the installation site of the money handling apparatus 200 to handle the frequent error, and/or an analyst who investigates the cause of the frequent error. The maintenance worker is a person in charge of maintenance and recovery work for the error in the money handling apparatus 200. The analyst analyzes the log data to diagnose the cause of the error, and determines an appropriate method for handling the error.

Based on notification destination setting prepared in advance, the management apparatus 100 determines a communication terminal to be a notification destination. In the notification destination setting, a notification destination can be designated based on at least one of the error code, area, and type of money handling apparatus 200.

In the notification destination setting, different notification destinations can be set depending on the error code. For example, different notification destinations can be set between a case where the frequent error is the error with error code "1", and a case where the frequent error is the error with error code "2". According to the error code, i.e., the type and/or content of the error, a communication terminal used by a maintenance worker and/or a communication terminal used by an analyst, who can handle an error with that error code, may be set as a notification destination.

In the notification destination setting, different notification destinations can be set depending on the area. For example, different notification destinations can be set between a case where an error with error code "2" is detected as a frequent error in the money handling apparatus 200 installed in an area "A", and a case where the same error with error code "2" is detected as a frequent error in the same money handling apparatus 200 installed in a different area "B". According to the area where the frequent error has been detected, a communication terminal used by a maintenance worker and/or a communication terminal used by an analyst, who can handle the detected error in that area, can be set as a notification destination.

In the notification destination setting, different notification destinations can be set depending on the type of money handling apparatus 200. For example, different notification destinations can be set between a case where a frequent error is detected in the money handling apparatus 200 of type "P", and a case where the same frequent error is detected in the money handling apparatus 200 of type "Q". Likewise, even for the same type of money handling apparatus, different notification destinations can be set depending on the model number of the money handling apparatus 200 in which a frequent error has been detected. Specifically, for example, different notification destinations can be set between an ATM and a change machine. Different notification destinations may be set between a change machine for a cash register and a change machine for self-checkout. According to the type of money handling apparatus 200 in which a frequent error has been detected, a communication terminal used by a maintenance worker and/or a communication terminal used by an analyst, who can handle the error in that type of money handling apparatus 200, can be set as a notification destination.

In the above examples, the error code, area, and type of money handling apparatuses 200 are separately described, but these may be combined to set the notification destination. The contents and the number of contents to be selectively combined, from among the error code, area, and type of money handling apparatuses 200, are not particularly limited.

In the notification process, information on occurrence of a frequent error, and information on the money handling apparatus 200 and/or the area where the frequent error has occurred are transmitted to each communication terminal set as a notification destination. In addition to these pieces of information, the management apparatus 100 may transmit the log data, error information, and additional information acquired from the money handling apparatus 200 to the communication terminal. The management apparatus 100 may extract part of information from the log data, error information, additional information, etc., and transmit the extracted information to the communication terminal. A maintenance worker who is notified of the information can check the information received at the communication terminal, and use the information for the work related to the frequent error. An analyst who is notified of the information can check the information received at the communication terminal, and use the information for the investigation related to the frequent error.

As described above, in the maintenance management system, the management apparatus 100 having acquired the log data from the money handling apparatus 200 detects occurrence of a frequent error, based on a determination condition, and performs the notification process for one or more notification destinations based on the notification destination setting. The determination condition allows the setting of which type of error and under what condition the error is determined as a frequent error. It enables preferential detection of an error that should be handled early. The notification destination setting allows the setting of a notification destination corresponding to each case of frequent errors. It enables notification to a maintenance worker and/or an analyst, who can handle the frequent error, according to the type of the frequent error, the type of the money handling apparatus 200 in which the frequent error has occurred, the area where the frequent error has occurred, etc. Since information on the frequent error, such as error information, additional information, etc., can be transmitted to the communication terminal set as the notification destination, the maintenance worker and the analyst can check the information received at the communication terminal to handle the frequent error.

### [Specific example of maintenance management system]

A specific example of the maintenance management system will be described. In the examples described below, the type of money handling apparatus 200 refers to classification by model number. For example, money handling apparatuses 200 that are change machines with different model numbers are regarded to be different types of money handling apparatuses 200.

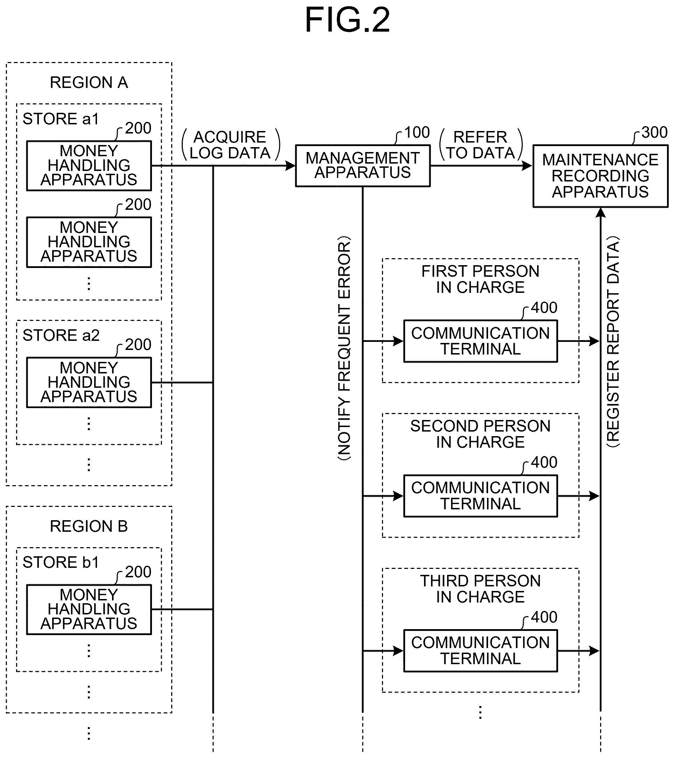

FIG. 2 shows a specific configuration example of a maintenance management system. The maintenance management system includes a management apparatus 100 and a plurality of money handling apparatuses 200. The maintenance management system may include communication terminals 400 used for notification of frequent errors. The maintenance management system may include a maintenance recording apparatus 300 that is used to register therein, report data including information on the work having performed on a frequent error by a maintenance worker and/or an analyst, who has received the notification at the communication terminal 400. Hereinafter, a maintenance worker and an analyst are collectively referred to simply as "person in charge".

The management apparatus 100 is configured to include a computer device having a communication unit, a control circuitry, and a memory. The management apparatus 100 may include an operation unit and a display. For example, a program corresponding to the control circuitry is stored in the memory or a dedicated storage device in advance, and this program being executed by hardware such as a CPU realizes the function and operation of the control circuitry. The control circuitry can perform control based on information inputted and outputted using the operation unit and the display, information transmitted and received using the communication unit, information stored in the memory, etc. The functions and operations of the management apparatus 100 described in the present embodiment are realized by the control of the control circuitry. In the present embodiment, the function and operation of the management apparatus 100 realized by the control circuitry may be described simply as the function and operation of the management apparatus 100 in some cases.

The management apparatus 100 is communicably connected to external apparatuses via the network. The external apparatuses include the money handling apparatuses 200, the maintenance recording apparatus 300, and the communication terminals 400. The configuration of the management apparatus 100 is not particularly limited as long as the function and operation described in the present embodiment can be realized. For example, the management apparatus 100 may be composed of a plurality of computer devices, or may include a cloud server.

The money handling apparatus 200 performs at least one of: a depositing process for receiving money from outside the apparatus at an inlet and storing the money in a storage unit inside the apparatus; and a dispensing process for feeding out money from a storage unit inside the apparatus and discharging the money from an outlet to outside the apparatus. The money handled by the money handling apparatus 200 may be coins, banknotes, or both coins and banknotes. The money handling apparatus 200 may be capable of performing a process for electronic payment using electronic money, a credit card, etc., in addition to the handling of physical money. The money handling and the process related to electronic payment may be realized by the configurations and functions of conventionally known money handling apparatuses.

The communication terminal 400 is configured to include a computer device having a communication unit, a control circuitry, and a memory. The communication terminal 400 includes a display that displays various kinds of information. The communication terminal 400 displays, on the display, information on a frequent error received from the management apparatus 100. The communication terminal 400 includes an operation unit for inputting various kinds of information. A touch-panel type liquid-crystal display apparatus may serve both as an operation unit and a display. For example, a smartphone or a tablet may be used as the communication terminal 400.

The maintenance recording apparatus 300 is configured to include a computer device having a communication unit, a control circuitry, and a memory. The maintenance recording apparatus 300 may include an operation unit and a display. Like the management apparatus 100, program stored in the memory or a dedicated storage device in advance is executed by hardware such as a CPU, thereby realizing the function and operation of the control circuitry, for example. The functions and operations of the maintenance recording apparatus 300 described in the present embodiment are realized by the control of the control circuitry. The function and operation of the maintenance recording apparatus 300 realized by the control circuitry may be simply referred to as the function and operation of the maintenance recording apparatus 300 in some cases. The configuration of the maintenance recording apparatus 300 is not particularly limited as long as the functions and operations described in the present embodiment can be realized. The maintenance recording apparatus 300 may be composed of a plurality of computer devices, or may include a cloud server.

In the example shown in FIG. 2, the management apparatus 100 is communicably connected to the money handling apparatuses 200 respectively installed in a plurality of regions including region A and region B. The management apparatus 100 acquires log data from each money handling apparatus 200. A plurality of stores including store a1 and store a2 are located in the region A. A plurality of stores including store b1 are located in the region B. There is a case where a plurality of money handling apparatuses 200 are installed in a single store, such as the store a1. There may be a case where a single money handling apparatus 200 is used in a single store.

The management apparatus 100 is communicably connected to a plurality of communication terminals 400 including a communication terminal 400 used by a first person in charge, a communication terminal 400 used by a second person in charge, and a communication terminal 400 used by a third person in charge. These persons handle errors that occur in the money handling apparatuses 200. As described with reference to FIG. 1, upon detecting a frequent error, the management apparatus 100 notifies the corresponding person in charge, of the occurrence of the frequent error via a communication terminal 400 that is selected as a notification destination in the notification destination setting from among the plurality of communication terminals 400. The management apparatus 100 transmits, to the communication terminal 400, information on the frequent error. The information may include information on the error code of the frequent error, information on error content of the frequent error, information on a money handling apparatus 200 in which the frequent error was detected, information on the region and/or the store where the money handling apparatus 200 is installed.

Upon receiving the notification, the person in charge goes to the store where the frequent error has been detected, based on the information received at the communication terminal 400. The person performs recovery work on the money handling apparatus 200 in which the frequent error has occurred, to recover from the frequent error. The person in charge having finished the recovery work operates the communication terminal 400 to create a report describing information on the recovery work, and transmits report data including the report to the maintenance recording apparatus 300.

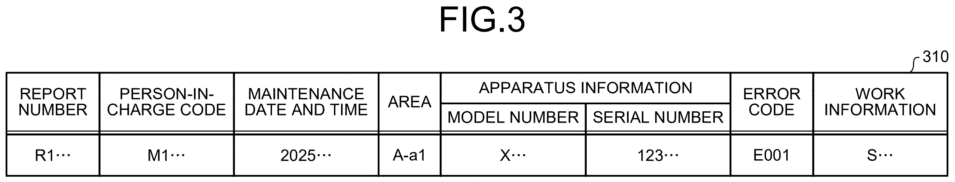

The maintenance recording apparatus 300 assigns a report number, which is identification information used to distinguish each report data, to the report data received from the communication terminal 400. The maintenance recording apparatus 300 stores the report data in the memory. The maintenance recording apparatus 300 manages the report data stored in the memory inside the apparatus 300. FIG. 3 shows an example of report data 310 that is received from the communication terminal 400 and managed in the maintenance recording apparatus 300.

The report data 310 includes a person-in-charge code of a person who created the report, and the maintenance date and time when the recovery work was performed on the money handling apparatus 200. The person-in-charge code is identification information used to distinguish each person in charge of handling errors.

The report data 310 includes: an error code; information on an area where the error occurred, i.e., a region and a store where the money handling apparatus 200 is installed; and apparatus information including the model number, serial number, etc., of the money handling apparatus 200 in which the error was subjected to recovery work. The serial number of the money handling apparatus 200 is identification information used to distinguish each money handling apparatus 200. Each of the money handling apparatuses 200 can be uniquely identified by its model number and serial number.

In the report data 310, the "work information" field includes information on the recovery work. In the "work information" field, information on the content of work that the person in charge performed for recovery from the error is registered. For example, information on the work and parts required for recovery from the error is registered under the "work information" field. The information may include cleaned parts and the content of cleaning, adjusted parts and the content of adjustment, replaced parts, etc., in the money handling apparatus 200. The management apparatus 100 can refer to the report data 310 stored in the memory of the maintenance recording apparatus 300, which will be described later.

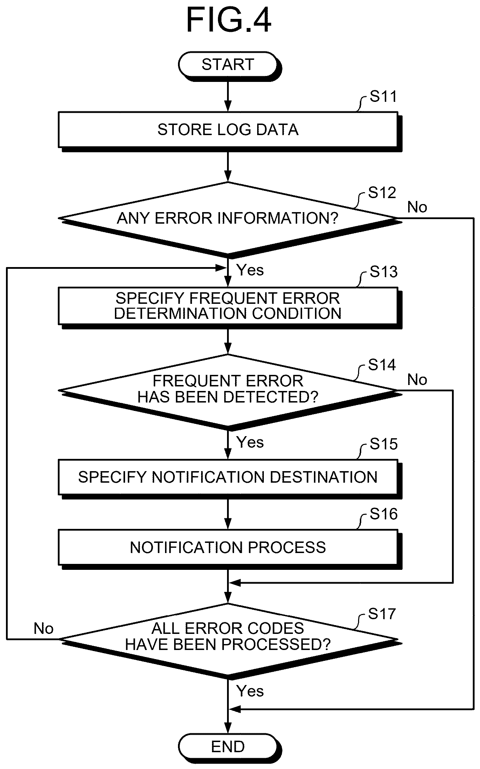

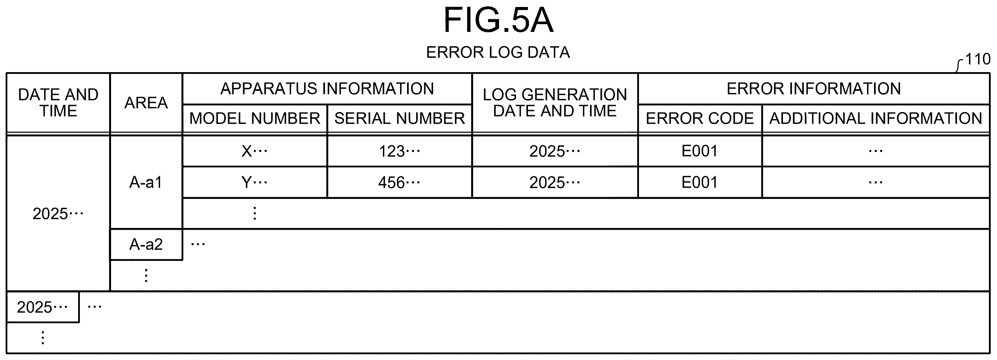

FIG. 4 is a flowchart showing an example of a process flow performed by the management apparatus 100. FIGS. 5A to 5C show examples of data and settings stored in the memory of the management apparatus 100. For example, when the business hours of the store where the money handling apparatus 200 is installed end, the money handling apparatus 200 transmits the log data generated during the business hours of the day, to the management apparatus 100. Upon receiving the log data, the management apparatus 100 starts the process shown in FIG. 4.

The management apparatus 100 stores and manages the log data received from the money handling apparatus 200 in the memory inside the apparatus (step S11). FIG. 5A shows an example of error log data 110 managed by the management apparatus 100. The log data that the management apparatus 100 receives from the money handling apparatus 200 includes: log data of money handling that normally ended without any error; and log data of money handling in which an error occurred. The error log data 110 is a database in which information on log data including error information is registered. In the error log data 110, information on errors that occurred in each money handling apparatus 200 installed in each area is accumulated.

The error log data 110 includes "date and time", "area", "apparatus information", "log generation date and time", and "error information". The "date and time" field indicates the date and time when the management apparatus 100 received the log data from the money handling apparatus 200. The "area" field indicates the area, i.e., the region and the store, where the money handling apparatus 200 is installed. In the example shown in FIG. 5A, the log data received from the money handling apparatus 200 installed in store "a1" located in region "A" is registered as "A-a1" in the "area" field. The "apparatus information" field in the error log data 110 includes the model number and the serial number of the money handling apparatus 200.

When an error has occurred in the money handling apparatus 200, the money handling apparatus 200 transmits log data including log generation date and time, and error information, to the management apparatus 100. The log generation date and time is the date and time when the log was generated. The error information includes additional information and an error code indicating the type of the error. The additional information is information that can be used for investigating the cause of the error.

In a case where a transport error, such as jamming of money or overlapping of money, has occurred in the transport path, the additional information includes at least one of: information on the denomination of money that caused the error; information on the location where jamming or overlapping occurred or was detected in the transport path inside the apparatus; information on the type of the transport path such as a belt type or a roller type; and information on the type, model number, etc., of an actuator such as a motor or a solenoid that drives belts or rollers for the transport of money.

In a case where a storage error, such as jamming of money, has occurred in a storage unit, the additional information includes at least one of: information on the denomination of money that caused the error; information on the location of the storage unit where jamming occurred or was detected; information on the money storage method such as a stack type or a tape type; information on the type of money storage container such as a bag type or a cassette type; and information on the type, model number, etc., of an actuator such as a motor or a solenoid that drives belts or rollers for the storage of money.

In a case where a recognition error in which money cannot be recognized occurred, the additional information includes at least one of: information on the recognition result of money that caused the error; information on the type and/or model number of the recognition unit; information on the type and/or model number of a sensor used for recognition; and information on an output value, etc., of the sensor.

The additional information may include: information on values indicating voltages and/or currents applied to sensors and actuators; information on values detected by sensors; information on values indicating loads generated in actuators; and information on values such as temperature, humidity, etc., when each error occurred.

The additional information may include information on the types and/or versions of software programs used for the processes related to errors, such as money transport, storage, and recognition. The additional information may include information on the types and/or versions of software programs used to control the sensors and the actuators.

Each time the management apparatus 100 receives log data from each money handling apparatus 200, the management apparatus 100 stores the log data in the memory. In addition, the management apparatus 100 registers and manages each piece of information obtained from the log data including the error information, in the error log data 110 as shown in FIG. 5A. With reference to the error log data 110, the management apparatus 100 can identify the error code of an error that occurred in the past in each money handling apparatus 200 installed in each area. Based on the log generation date and time, the management apparatus 100 can count, for each error code, the number of errors that occurred within a predetermined time period.

As shown in FIG. 4, the management apparatus 100, which has stored the log data received from the money handling apparatus 200 into the memory, determines whether error information is included in the log data (step S12). If error information is not included in the log data (step S12; No), the management apparatus 100 ends the process shown in FIG. 4. If error information is included in the log data (step S12; Yes), the management apparatus 100 starts a frequent error detection process.

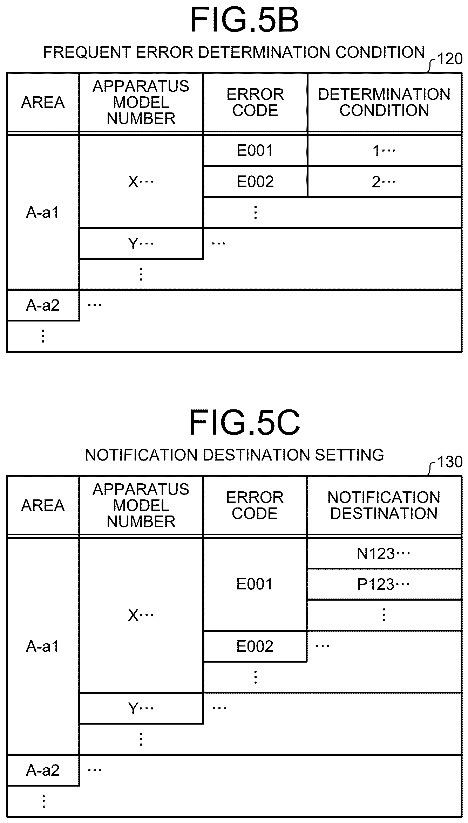

The management apparatus 100 specifies a determination condition corresponding to the error (step S13). FIG. 5B shows an example of a frequent error determination condition 120 prepared in the memory of the management apparatus 100 in advance. The frequent error determination condition 120 includes fields for "area", "apparatus model number", "error code", and "determination condition". In the "determination condition" field, the period for counting the number of errors and the threshold for the number of errors are set. For example, it is set to determine an error as a frequent error if the error occurs 10 times in one day.

As shown in FIG. 5B, different determination conditions can be set for each area, i.e., for each region and each store. Even in the same area, different determination conditions can be set for each type of money handling apparatus 200. Even for the same type of money handling apparatus 200, different determination conditions can be set for each error code. In the example shown in FIG. 5B, the apparatus model number of each money handling apparatus 200 is used as the apparatus type, and different determination conditions are set for each apparatus model number.

Upon receiving the log data from the money handling apparatus 200, the management apparatus 100 selects a determination condition with reference to the frequent error determination condition 120 shown in FIG. 5B, based on the area, i.e., the region and the store, where the money handling apparatus 200 is installed, the type, i.e., the apparatus model number, of the money handling apparatus 200, and the error code generated in the money handling apparatus 200, which are included in the log data. The management apparatus 100 specifies a determination condition corresponding to the area, the apparatus model number, and the error code, from among a plurality of determination conditions in the frequent error determination condition 120 shown in FIG. 5B.

As shown in FIG. 4, the management apparatus 100 detects a frequent error, based on the specified determination condition (step S14). For example, in a case where, in the determination condition, a threshold is set for the number of errors of the same error code which occur within one day, the management apparatus 100 refers to the error log data 110 shown in FIG. 5A, and calculates the total number of errors of the same error code which have occurred within one day. Likewise, if the determination condition is set by specifying a predetermined period such as one week or one month, the total number of errors within the predetermined period is calculated.

In a case where, in the determination condition, a threshold is set for the number of occurrences of errors within an area, i.e., the number of occurrences of errors within a region and a store, the management apparatus 100 refers to the error log data 110 shown in FIG. 5A, and calculates the total number of errors of the same type which have occurred in the same area as the installation area of the money handling apparatus 200 in which the frequent error is detected. That is, the management apparatus 100 calculates a total number of errors having the same error code as that received from the money handling apparatus 200, among errors that occurred in the same area as that of the money handling apparatus 200.

In a case where, in the determination condition, a threshold is set for the number of occurrences of errors in the money handling apparatuses 200 of the same type (apparatus model number), the management apparatus 100 refers to the error log data 110 shown in FIG. 5A, and calculates the total number of errors of the same error code which have occurred in the money handling apparatuses 200 of the same type.

The management apparatus 100 calculates a total number of errors based on the determination condition, compares the total number of errors with the threshold set in the determination condition, and determines whether the error is a frequent error based on the comparison result.

If the determination result is that the error is not a frequent error (FIG. 4, step S14; No), the management apparatus 100 determines whether processing has been completed for all the error codes included in the log data received from the money handling apparatus 200 (step S17). When processing has been completed for all the error codes (step S17; Yes), the management apparatus 100 ends the process shown in FIG. 4.

If processing has not been completed for all the error codes, i.e., if other unprocessed error codes are included in the log data (step S17; No), the management apparatus 100 returns to step S13 and performs the above process for the unprocessed error codes. If a plurality of errors with different error codes have occurred in a money handling apparatus 200 while the store is open, a plurality of error codes are included in the log data of this money handling apparatus 200. Therefore, each error code is subjected to the process for determining whether the error is a frequent error.

When the determination result in step S14 is that the error is a frequent error, i.e., when a frequent error is detected (step S14; Yes), the management apparatus 100 specifies a notification destination corresponding to this frequent error (step S15).

FIG. 5C shows an example of notification destination setting 130 prepared in the memory of the management apparatus 100 in advance. The notification destination setting 130 includes fields for "area", "apparatus model number", "error code", and "notification destination". In the "notification destination" field, information required for the management apparatus 100 to communicate with one or more communication terminals 400 set as notification destinations is registered.

As shown in FIG. 5C, different notification destinations can be set for each area, i.e., for each region and each store. Even in the same area, different notification destinations can be set for each type of money handling apparatus 200. Even for the same type of money handling apparatus 200, different notification destinations can be set for each error code. In the example shown in FIG. 5C, the apparatus model number of each money handling apparatus 200 is used as the apparatus type, and different notification destinations are set for each apparatus model number.

The management apparatus 100 selects a notification destination with reference to the notification destination setting 130 shown in FIG. 5C, based on: the area, i.e., the region and the store, where the money handling apparatus 200 having detected the frequent error is installed; the type of the money handling apparatus 200, i.e., the apparatus model number; and the error code of the frequent error generated in the money handling apparatus 200. The management apparatus 100 specifies a notification destination corresponding to the area, the apparatus model number, and the error code, from among a plurality of notification destinations.

As shown in FIG. 4, the management apparatus 100 performs a notification process for notifying the detected frequent error, to the communication terminal 400 specified as the notification destination based on the notification destination setting 130 (step S16). If an unprocessed error code still remains (step S17; No), the management apparatus 100 having ended the notification process performs steps S13 to S16 for the remaining error code. When all the error codes have been processed (step S17; Yes), the process shown in FIG. 4 is ended.

When an error is determined as a frequent error, based on a result of comparison of the total number of occurrences of this error in a plurality of money handling apparatuses 200 with a threshold, the management apparatus 100 may transmit information on each of the plurality of money handling apparatuses 200 in which this frequent error has occurred, to the communication terminals 400 specified in step S15. The management apparatus 100 may perform steps S15 and S16 for each of the plurality of money handling apparatuses 200 in which the frequent error has occurred. The management apparatus 100 may perform the notification process for each notification destination, i.e., a communication terminal 400, corresponding to each money handling apparatus 200 in which the frequent error has occurred.

Specifically, when an error that has occurred in a certain money handling apparatus 200 is determined as a frequent error, the management apparatus 100 may notify, via the communication terminal 400, the person in charge set as the notification destination corresponding to this money handling apparatus 200, that the same error has occurred in another money handling apparatus 200. For example, the notification includes information on another money handling apparatus 200, so that the person in charge who has received the notification can contact another person in charge of another money handling apparatus in which the same frequent error has occurred. The management apparatus 100 may notify, in addition to the person set as the notification destination corresponding to the money handling apparatuses 200 in which the frequent error has been detected, a different person in charge corresponding to another money handling apparatus 200 in which the same error has occurred, of the occurrence of the frequent error.

The notification destination setting 130 is not limited to the setting shown in FIG. 5C, and may be a setting for selecting a notification destination based on the technical level and/or experience of the person in charge.

For example, the management apparatus 100 manages, for each error code, the content of work for recovery to be performed in the money handling apparatus 200, and further manages, for each content of work, information on a person in charge capable of performing the content of work. The management apparatus 100 may specify the content of work for recovery based on the error code, select a person in charge capable of performing the specified content of work, and determine the selected person in charge as a notification destination to transmit the relevant information.

For example, the management apparatus 100 manages, for each error code, the technical level required for the recovery work to be performed in the money handling apparatus 200, and further manages information on the technical level of each person in charge. The management apparatus 100 may specify the technical level required for the recovery work based on the error code, select a person in charge having the specified technical level, and determine the selected person in charge as a notification destination to transmit the relevant information.

For example, the management apparatus 100 manages, for each error code, the content of work for recovery to be performed in the money handling apparatus 200, and further manages, for each content of work, information on a person in charge who has performed the content of work in the past. The management apparatus 100 may specify the content of work to be performed for recovery based on the error code, select a person in charge who has experienced the specified content of work, and determine the selected person in charge as a notification destination to transmit the relevant information.

When the person to be set as the notification destination is an analyst for investigating the cause of an error, an analyst capable of performing the analysis work may be selected based on the technical level and/or experience on the analysis work of each person, in the same manner as that for the maintenance worker performing the recovery work. For example, when there are an analyst from the manufacturer of the money handling apparatus 200 and an analyst from the sales company of the money handling apparatus 200, the notification destination setting 130 may be prepared so that at least one of the manufacturer's analyst and the sales company's analyst becomes a notification destination, according to the error code.

When performing the notification process in step S16 shown in FIG. 4, the management apparatus 100 transmits information on the detected frequent error to the communication terminal 400 set as the notification destination. The information to be transmitted includes information on the area in the error log data 110 shown in FIG. 5A, i.e., the store and the region where the money handling apparatus 200 in which the frequent error has occurred is installed. The information further includes the apparatus information in the error log data 110 shown in FIG. 5A, i.e., the model number and/or the serial number of the money handling apparatus 200 in which the frequent error has occurred.

In a case where the frequent error determination condition 120 is set such that, when the total number of occurrences of an error in a plurality of money handling apparatuses 200 reaches a predetermined threshold, this error is determined to be a frequent error, information on each of the plurality of money handling apparatus 200 in which the frequent error has occurred may be transmitted to the communication terminal 400 in some cases.

When notifying the detected frequent error, the management apparatus 100 may transmit the additional information in the error log data 110 shown in FIG. 5A or information extracted from the additional information to the communication terminal 400 set as the notification destination. As described above, the additional information includes information on the error. The person in charge, who has received the notification of the frequent error, can check the additional information received at the communication terminal 400 to examine the content of work for recovery from the error or investigate the cause of the error.

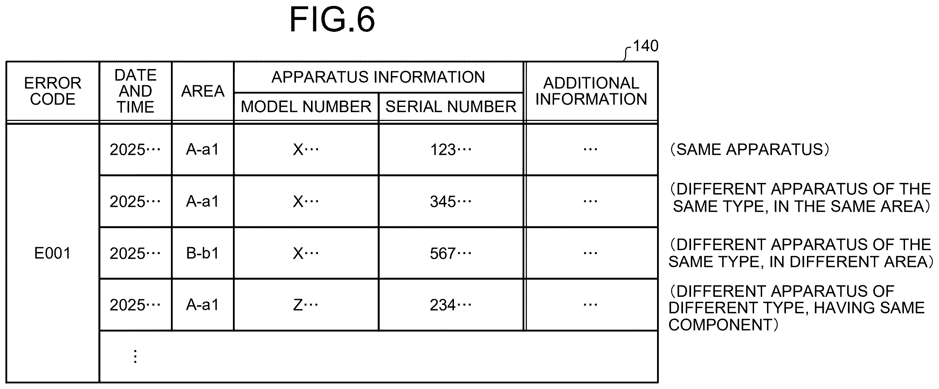

In addition to the additional information obtained in the money handling apparatus 200 in which the frequent error has occurred, the management apparatus 100 may transmit, as reference data, additional information that has been obtained when money handling is normally ended without occurrence of a frequent error, to the communication terminal 400. FIG. 6 shows an example of reference data 140.

For example, when the management apparatus 100 has detected an error with error code "E001" as a frequent error, the management apparatus 100 adds, to the reference data 140, the log data obtained when money handling was normally ended in the money handling apparatus 200 in which this error was detected, as shown in FIG. 6. In the example shown in FIG. 6, the management apparatus 100 has determined an error that occurred in the money handling apparatus 200 located in area "A-a1" and having model number "X···" and serial number "123···" as the frequent error and added, to the reference data 140, the log data obtained when money handling was normally ended in this money handling apparatus 200.

In this case, the money handling apparatus 200 may add information, which is to be included in the additional information in the log data when an error has occurred, in the log data obtained when money handling was normally ended. That is, the money handling apparatus 200 prepares the log data including the additional information for all money handling operations including the normally ended operations. When the management apparatus 100 has detected a frequent error in a money handling apparatus 200, the management apparatus 100 may transmit the most recent one or more pieces of log data obtained when money handling was normally ended in this money handling apparatus 200, to the communication terminal 400, as the reference data 140.

By comparing the additional information obtained when money handling was normally ended without errors in a money handling apparatus 200 in the past with the additional information obtained when an error occurred in this money handling apparatus 200, the cause of the error may be identified based on the comparison result. That is, the cause of the error may be identified from a difference observed in these pieces of additional information. The person in charge set as the notification destination is notified of the detection of the frequent error and receives information relevant to the frequent error at the communication terminal 400. The person can compare the additional information at the time of error occurrence with the additional information at the time of normal completion, to examine the content of work for recovery or investigate the cause of the frequent error.

The management apparatus 100 may transmit additional information, which was obtained when money handling was normally ended without occurrence of a frequent error in another money handling apparatus 200 of the same type as the money handling apparatus 200 in which the frequent error was detected, as the reference data 140, to the communication terminal 400.

For example, the management apparatus 100 having detected an error with error code "E001" as a frequent error adds, to the reference data 140, the log data of a money handling apparatus 200 in which an error with error code "E001" does not occur and which is of the same type as the money handling apparatus 200 in which the frequent error was detected. The log data to be added to the reference data 140 may be the log data of a different money handling apparatus 200 installed in the same area as the money handling apparatus 200 in which the frequent error has occurred, or may be the log data of a different money handling apparatus 200 installed in a different area.

In the example shown in FIG. 6, the management apparatus 100 has determined that an error occurred in the money handling apparatus 200 installed in area "A-a1" and having model number "X···" and serial number "123···" is a frequent error, and added to the reference data 140 the log data obtained when money handling was normally ended in the different money handling apparatus 200 installed in the same area "A-a1" and having the same model number "X···" but different serial number "345···". Moreover, the management apparatus 100 has added to the reference data 140 the log data obtained when money handling was normally ended in the different money handling apparatus 200 installed in a different area "B-b1" and having the same model number "X···" but different serial number "567···".

By comparing additional information of an apparatus 200 in which an error occurred with additional information of a different apparatus 200 of the same type in which no error occurred, the cause of the error may be identified based on the comparison result. That is, the cause of the error may be identified from a difference observed in these pieces of additional information.

The management apparatus 100 may add to the reference data 140 the log data of money handling that was normally ended in the money handling apparatus 200 of a different type from the money handling apparatus 200 in which a frequent error was detected. For example, when the frequent error is an error in the recognition unit, the management apparatus 100 may add to the reference data 140 the log data of money handling that was normally ended in the money handling apparatus 200 of a different type but having the same recognition unit. Likewise, when the frequent error is an error in the transport unit or the storage unit, the management apparatus 100 may add to the reference data 140 the log data of money handling that was normally ended in the money handling apparatus 200 of a different type but having the same transport unit or storage unit.

In the example shown in FIG. 6, the management apparatus 100, which has determined that an error that occurred in the money handling apparatus 200 installed in area "A-a1" and having model number "X···" and serial number "123···" is a frequent error, adds to the reference data 140 the log data obtained when money handling was normally ended in the money handling apparatus 200 having the same components but another model number "Z···".

By comparing additional information obtained in an apparatus 200 in which an error occurred with additional information obtained in normally ended money handling in a different apparatus 200 of a different type but having the same component related to the error, the cause of the error may be identified from the comparison result. That is, the cause of the error may be identified from a difference observed in these pieces of additional information.

Instead of or in addition to the mode in which the management apparatus 100 transmits the additional information obtained in money handling in which an error occurred and the additional information obtained in money handling normally ended to the communication terminal 400, these pieces of additional information may be compared to extract a difference therebetween in the management apparatus 100, and information on the difference may be transmitted to the communication terminal 400 from the management apparatus 100. The management apparatus 100 may transmit the information on the difference as an error analysis result to the communication terminal 400. The management apparatus 100 may transmit the result of estimating the cause of the error obtained by using AI (artificial intelligence) or machine learning, to the communication terminal 400.

The management apparatus 100 may transmit information on report data 310 being managed by the maintenance recording apparatus 300 to the communication terminal 400. As described with reference to FIG. 3, after a person in charge performs recovery work for the error on the money handling apparatus 200, the person registers the report data 310 in the maintenance recording apparatus 300.

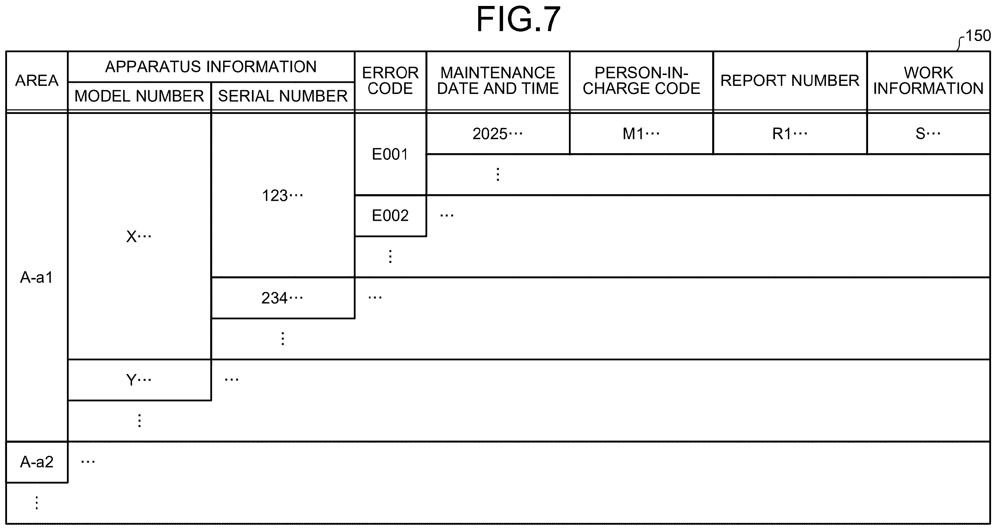

The management apparatus 100 can acquire the report data 310 registered in the maintenance recording apparatus 300, and use the same as information on the frequent error. FIG. 7 shows an example of data 150 used by the management apparatus 100.

For example, the management apparatus 100 can collect the report data 310 registered in the maintenance recording apparatus 300, and classify the report data 310 based on area, i.e., a region and a store, the type of the money handling apparatus 200, i.e., the model number and the serial number of the money handling apparatus 200, and the error code, as shown in FIG. 7.

The management apparatus 100 can identify, from the data 150 shown in FIG. 7, the maintenance date and time of recovery work performed on an error of each error code that occurred in each money handling apparatus 200 in each area, and the person-in-charge code of the person in charge who performed the recovery work. Furthermore, the management apparatus 100 can identify the report number of the report data 310 created by the person in charge and registered in the maintenance recording apparatus 300, and work information included in this report data 310.

For example, the management apparatus 100 having detected an error with error code "E001" as a frequent error identifies the recovery work that was performed for a money handling apparatus 200 in which the error with error code "E001" occurred in the past, based on the data 150 shown in FIG. 7. The management apparatus 100 transmits information on the identified recovery work to the communication terminal 400 set as a notification destination to be notified of the detected frequent error.

For example, when the management apparatus 100 transmits a report number, the person in charge can refer to the report data 310 stored in the memory of the maintenance recording apparatus 300 based on the report number received at the communication terminal 400. The person can check the details of the recovery work performed for the same error in the past.

For example, when the management apparatus 100 transmits a person-in-charge code who created the report, the person in charge can identify a person who performed recovery work for the same error in the past based on the person-in-charge code received at the communication terminal 400. The person who needs to perform the recovery work for the frequent error can contact the person who has experienced this recovery work to check the details of the recovery work.

Instead of or in addition to the information relevant to the report, the management apparatus 100 may directly transmit the report data 310 and/or the work information to the communication terminal 400, and the person in charge may check the details of the recovery work performed in the past from the information received at the communication terminal 400.

The management apparatus 100 may notify the person in charge, who needs to perform maintenance work on the money handling apparatus 200, of the information on the frequent error. For example, information on the maintenance work to be performed in the future is registered in the maintenance recording apparatus 300 in advance. Before heading to the site where the money handling apparatus 200 to be subjected to the maintenance work is installed, the person in charge may operate the communication terminal 400 to register the information on the maintenance work. An administrator who manages the person in charge may register the information on the maintenance work in the maintenance recording apparatus 300 in advance.

Specifically, for example, before performing the maintenance work, information on the type of the money handling apparatus 200 as a maintenance target is registered in the maintenance recording apparatus 300. Based on the information registered in the maintenance recording apparatus 300 in advance, the management apparatus 100 determines whether the money handling apparatus 200 as a maintenance target is an apparatus of the same type as the money handling apparatus 200 in which the frequent error was detected. If these apparatuses 200 are of the same type, the management apparatus 100 notifies the person in charge that the frequent error has been detected in the money handling apparatus 200 of the same type, by transmitting the relevant information to the communication terminal 400. When performing the maintenance work, the person in charge who has received the notification can check for any signs of the frequent error and take appropriate actions if necessary.

The management apparatus 100 may transmit information on the recovery work for the frequent error to the communication terminal 400 used by the person in charge. For example, the management apparatus 100 transmits the person-in-charge code of a person in charge who previously performed the recovery work, or the report number of the report data 310 created by this person. The person who needs to perform the recovery work can consult the person who has performed this recovery work or refer to the report data 310 on this recovery work, before the maintenance work.

The management apparatus 100 may transmit, to the communication terminal 400, work information including information on the recovery work, such as cleaned parts and the content of cleaning, adjusted parts and the content of adjustment, replaced parts, etc. The management apparatus 100 may transmit the report data 310 including the work information to the communication terminal 400. The person in charge can check the information received at the communication terminal 400 to prepare cleaning tools, adjustment tools, replacement parts, or the like before heading out for the maintenance work.

The management apparatus 100 may not necessarily transmit the information on the error to the communication terminal 400, and the person in charge may make an inquiry via the communication terminal 400 to the management apparatus 100 and obtain the information from the management apparatus 100.

For example, when the person in charge inputs and transmits an error code to the management apparatus 100 through the communication terminal 400, the management apparatus 100 extracts information relevant to the received error code from the error log data 110 shown in FIG. 5A, the data 140 shown in FIG. 6 regarding the report data 310, and the data 150 shown in FIG. 7, and transmits the extracted information to the communication terminal 400.

For example, like the case described above, information on an area, such as a region and a store, where the same error as the error with the error code inputted through the communication terminal 400 has occurred, or information on the apparatus type, such as a model number and a serial number, of the apparatus in which the same error has occurred, may be transmitted to the communication terminal 400. For example, information on recovery work for the error with the error code inputted through the communication terminal 400, or information such as a report number is transmitted to the communication terminal 400.

In addition to the error code, information on an area such as a region and a store may be inputted and transmitted from the communication terminal 400 to the management apparatus 100, and information on an error with the inputted error code that has occurred in the same area as the inputted area may be transmitted from the management apparatus 100 back to the communication terminal 400. In addition to the error code, information on an apparatus such as a model number and a serial number to specify a type of the apparatus may be inputted and transmitted from the communication terminal 400 to the management apparatus 100, and information on an error with the inputted error code that has occurred in the same type of apparatus as the inputted apparatus type may be transmitted from the management apparatus 100 back to the communication terminal 400.

When the communication terminal 400 requests information from the management apparatus 100, the information may be made viewable on the communication terminal 400, instead of transmitting the information from the management apparatus 100 to the communication terminal 400. For example, by using a web-based application, the person in charge may enter information on the error code, area, apparatus, etc., on the communication terminal 400, so that he/she can view information on the error on the application.

In the present embodiment, the money handling apparatus 200 has been described as an example, but the type of apparatus that the management apparatus 100 manages is not particularly limited. Moreover, the contents of errors and information on the errors described in the present embodiment are merely examples, and do not limit the contents and errors. The information that the management apparatus 100 acquires from the money handling apparatus 200 is also an example, and information to be acquired may not necessarily include a part of the above-described information, or may include information other than the above-described information. Also, the information that the management apparatus 100 transmits to the communication terminal 400 is an example, and information to be transmitted may not necessarily include a part of the above-described information, or may include information other than the above-described information.

According to the management system and the management method of the present disclosure, since occurrence of a frequent error in an apparatus to be subjected to maintenance management is detected and notified, a person in charge of maintenance, who has received the notification, can handle the error early.

The configuration of the maintenance management system described in the present embodiment is conceptually functional, and the maintenance management system is not physically limited to the configuration. The distributed or integrated forms of each apparatus are not limited to the forms described above, and all or some of the forms may be distributed or integrated functionally or physically in any unit depending on various loads, use statuses, or the like.

Although the embodiment of the maintenance management system according to the present disclosure has been described with reference to the drawings, the configurations and operations of the maintenance management system and the apparatuses constituting the system are not limited to the above embodiment, and may be carried out with various improvements, alterations, and modifications, based on the knowledge of those skilled in the art without departing from the spirit thereof.

## Claims

1. A management system comprising:
one or more apparatuses (200) configured to generate log data including error information that includes information on an error having occurred therein; and
a management apparatus (100) configured to manage the log data acquired from each apparatus (200), detect a frequent error based on the error information included in each log data, and perform a notification process for notifying a predetermined notification apparatus (400) set as a notification destination of occurrence of the frequent error.

2. The management system according to claim 1, wherein
the management apparatus (100) determines that the error in the error information is the frequent error based on a result of comparison between a number of occurrences of errors, whose type is the same as a type of the error in the error information, within a predetermined period, and a predetermined threshold.

3. The management system according to claim 2, wherein
the management apparatus (100) calculates a total number by summing up the number of occurrences of the same type of errors within the predetermined period, across a plurality of apparatuses (200) installed in a predetermined area, and determines that the error in the error information is the frequent error, based on a result of comparison between the total number and a predetermined threshold.

4. The management system according to claim 2, wherein
the threshold is set to different values for each type of apparatus (200).

5. The management system according to claim 3, wherein
the threshold is set to different values for each area where the apparatuses (200) are installed.

6. The management system according to claim 1, wherein
the management apparatus (100) manages person-in-charge information including information on correspondence between a work to be performed in the apparatus (200) for handling each of a plurality of types of errors, and a person in charge capable of performing the work, and
the management apparatus (100) specifies the type of the frequent error based on the error information, selects a person in charge capable of performing the work corresponding to the specified type of the frequent error based on the person-in-charge information, and sets the notification apparatus (400) corresponding to the selected person in charge as the notification destination.

7. The management system according to claim 1, wherein
the management apparatus (100) manages person-in-charge information including at least one of: information on a technical level of each person in charge who performs work corresponding to an error in the apparatus (200); and information on a record of the work that each person in charge has performed in each apparatus (200) in the past, and
the management apparatus (100) specifies a type of the frequent error based on the error information, selects a person in charge who has the technical level corresponding to the specified type of the frequent error and/or a person in charge who has experienced the work corresponding to the specified type of the frequent error, based on the person-in-charge information, and sets the notification apparatus (400) corresponding to the selected person in charge as the notification destination.

8. The management system according to claim 1, wherein
the management apparatus (100) manages person-in-charge information on correspondence between a plurality of types of errors and persons in charge capable of investigating the respective errors, and
the management apparatus (100) specifies a type of the frequent error based on the error information, selects a person in charge capable of investigating the specified type of the frequent error, based on the person-in-charge information, and sets the notification apparatus (400) corresponding to the selected person in charge as the notification destination.

9. The management system according to claim 1, wherein
the management apparatus (100) extracts, from among a plurality of log data managed therein, log data of an apparatus (200) in which the frequent error has occurred, and log data of an apparatus (200) in which the frequent error has not occurred, and transmits the extracted log data to the notification apparatus (400) set as the notification destination.

10. The management system according to claim 1, wherein
the management apparatus (100) transmits, to the notification apparatus (400) set as the notification destination, information on a difference between log data of an apparatus (200) in which the frequent error has occurred and log data of an apparatus (200) in which the frequent error has not occurred.

11. The management system according to claim 9, wherein
the log data of the apparatus (200) in which the frequent error has not occurred is log data of the apparatus (200) having a component that is related to the frequent error and included in the apparatus (200) in which the frequent error has occurred.

12. The management system according to claim 1, wherein
in a case where maintenance work is to be performed on an apparatus (200) having a component that is related to the frequent error and included in the apparatus (200) in which the frequent error has occurred,
the management apparatus (100) transmits information on the frequent error to a communication terminal corresponding to a person in charge who performs the maintenance work.

13. A management method comprising:
generating, by an apparatus (200), log data including error information that includes information on an error having occurred in the apparatus;
acquiring, by a management apparatus (100), the log data from each apparatus (200) to manage acquired log data in the management apparatus (100); and
detecting, by the management apparatus (100), a frequent error based on the error information included in each log data, to perform a notification process by which occurrence of the frequent error is notified to a predetermined notification apparatus (400) set as a notification destination.
